# EUROPÄISCHE PATENTSCHRIFT

(11) **EP 1 670 723 B1**
(45) Veröffentlichungstag und Bekanntmachung des Hinweises auf die Patenterteilung: **04.04.2012**
(21) Anmeldenummer: 03756477.0
(22) Anmeldetag: 07.10.2003
(51) Int. Cl.: C02F 3/22, C02F 3/12, B01F 3/04, B01F 5/04, B01F 5/02, B01F 3/08

(54) **VERFAHREN ZUM BIOLOGISCHEN REINIGEN VON ABWASSER**
METHOD FOR BIOLOGICALLY PURIFYING WASTE WATER
PROCEDE DE PURIFICATION BIOLOGIQUE D'EAUX USEES

(43) Veröffentlichungstag der Anmeldung: 21.06.2006
(73) Patentinhaber: Technocon GmbH, 38678 Clausthal-Zellerfeld (DE)
(72) Erfinder: VOGELPOHL, Alfons, 38678 Clausthal-Zellerfeld (DE); KIM, Soo-Myung, 38678 Clausthal-Zellerfeld (DE)
(74) Vertreter: Döring, Roger
(86) Internationale Anmeldenummer: PCT/EP2003/011043
(87) Internationale Veröffentlichungsnummer: WO 2005/044740

(56) Entgegenhaltungen:
- FR-A- 1 448 154
- FR-E- 90 565
- GB-A- 1 214 818
- GB-A- 1 362 789
- DATABASE WPI Section Ch, Week 198324 Derwent Publications Ltd., London, GB; Class J02, AN 1983-58057K XP002287123 & SU 946 623 A (LOBASHEV A. ET AL.) 30. Juli 1982 (1982-07-30)

## Beschreibung

Die Erfindung bezieht sich auf ein Verfahren zum biologischen Reinigen von Abwasser, bei welchem das Abwasser und Gas einem Mikroorganismen enthaltenden Reaktionsbehälter über eine ausschließlich zwei stoßfreie, konzentrisch zueinander angeordnete Rohre aufweisende Zweistoffdüse zugeführt werden, die frei von zusätzlichen Zuführungselementen ist und mit vertikaler Achse in den Reaktionsbehälter bis in das darin befindliche Abwasser hineinragt, wobei das innen liegende, das Gas führende innere Rohr der Zweistoffdüse unter Einschluß eines freien Ringspalts von dem das mittels einer Pumpe geförderte Abwasser führenden äußeren Rohr umschlossen ist, und bei welchem das Gemisch aus Abwasser und Gas in dem Reaktionsbehälter in einem Kreislauf bewegt wird (EP 0 130 499 B1).

Bei der biologischen Reinigung von Abwasser werden organische Schadstoffe von Mikroorganismen - im folgenden als "Biomasse" bezeichnet - unter Verwendung von Sauerstoff in unschädliche Stoffe umgewandelt. Das Abwasser wird durch Begasen eines Biomasse-Wasser-Gemisches in einem Reaktionsbehälter gereinigt, dem kontinuierlich Abwasser und Gas zugeführt und eine vergleichbare Menge an Biomasse-WasserGemisch entnommen werden. Unter "Gas" sollen Luft, mit Sauerstoff angereicherte Luft oder auch reines Sauerstoffgas verstanden werden.

Im häuslichen Bereich, aber auch bei vielen industriellen Prozessen entstehen organisch beladene Abwässer. Für die Reinigung solcher Abwässer sind Verfahren zum Eliminieren der gelösten organischen Verbindungen auf aerobem Wege durch Mikroorganismen bekannt. Diese Verfahren werden meistens in flachen Belebungsbecken durchgeführt. Die Nachteile derartiger Verfahren, wie Geruchsbelästigung der Umgebung aufgrund hoher Abluftmengen, hoher Lärmpegel, großer Platzbedarf sowie hohe Investitions- und Energiekosten, sind allgemein bekannt.

Es ist weiterhin bekannt, Abwasser in hohen zylindrischen Türmen ähnlich einer Blasensäule zu reinigen (DE-Z "Chemie-Ingenieur-Technik" 54 (1982), Nr. 11, Seiten 939

bis 952). Wegen der ungünstigen hydrodynamischen Verhältnisse und damit der relativ schlechten Stoffübergangsbedingungen von Blasensäulen ist deren Raumbelastung, das ist die auf das Volumen des Reaktionsbehälters und den Tag bezogene und in CSB gemessene Menge an Schmutzstoffen, vergleichsweise niedrig. Sie liegt bei etwa 1 kg CSB/m³d. Die Begasung erfolgt ausschließlich am Boden des jeweils eingesetzten Turmes, wodurch der spezifische Energiebedarf für dieses Verfahren relativ hoch ausfällt.

Aus der DE 41 05726 C1 ist ein Verfahren bekannt, bei dem ein Reaktionsbehälter eingesetzt wird, der in der Fachwelt als "Schlaufenreaktor" bezeichnet wird. Bei einem Schlaufenreaktor handelt es sich um einen mit vertikaler Achse angeordneten zylindrischen Behälter, in dessen Innenraum ein an beiden Seiten offenes Leitrohr mit ebenfalls vertikaler Achse angebracht ist. Im Reaktionsbehälter nach dieser Druckschrift ist über dem Leitrohr eine Zweistoffdüse angeordnet, mittels derer Abwasser und Gas zugeführt werden. Das Gas wird hier über ein geradliniges Rohr und einen dasselbe umgebenden Kanal einer ersten Mischstrecke der Zweistoffdüse zugeführt, der über einen Ringkanal auch das Abwasser aufgegeben wird. An die erste Mischstrecke schließen eine zweite Mischstrecke und eine dritte Mischstrecke jeweils mit Absatz bzw. auf Stoß an. Zwischen der zweiten und der dritten Mischstrecke ist außerdem ein Ringkanal mit Ansaugdüsen angeordnet, über welche Abwasser und Gas angesaugt werden, die in der dritten Mischstrecke mit dem in der Zweistoffdüse vorhandenen Substrat vermischt werden .

Bei dem Verfahren nach der DE 198 42 332 A1 sind im ebenfalls als Schlaufenreaktor ausgeführten Reaktionsbehälter ein oberes Einsteckrohr und ein unteres Einsteckrohr vorhanden, die durch ein Trennblech getrennt sind. Das Gas wird dem Reaktionsbehälter über eine Begasungseinheit zugeführt, die am Boden des Reaktionsbehälters angeordnet ist. Im Bereich des Trennblechs ist eine aus zwei konzentrischen Rohren bestehende Düse angebracht, in der von einer Pumpe geförderte Flüssigkeit abwärts in das untere Einsteckrohr verströmt wird. Dabei wird von dieser Einstoffdüse weitere Flüssigkeit mitgerissen.

Der ebenfalls als Schlaufenreaktor ausgeführte Reaktor nach der DE 40 12 300 A1 weist als Einbau ein Strömungsleitrohr auf, in dessen unterem Bereich eine Düse angebracht ist, deren Aufbau in der Druckschrift nicht beschrieben ist. Dieser Düse werden Gas über eine erste Leitung und Abwasser über eine zweite Leitung zugeführt. Gemäß den Zeichnungen dieser Druckschrift ist der für die Gaszufuhr dienende Düsenteil länger als der für das Abwasser bestimmte Düsenteil.

Auch der wieder als Schlaufenreaktor ausgeführte Reaktor nach der DE 37 03 824 A1 hat als Einbau ein Leitrohr (mit Deflektor), in das eine Düse weit hineinragt. Sie hat eine Zentralbohrung, einen dieselbe konzentrisch umgebenden ersten Ringspalt zur Zuführung von Gas und einen den ersten Ringspalt konzentrisch umgebenden zweiten Ringspalt mit gleicher axialer Länge. Zu reinigendes Abwasser wird über die Zentralbohrung und den Ringspalt zugeführt. Die Zentralbohrung ist axial länger als der der Gaszufuhr dienende erste Ringspalt.

Mit dem eingangs beschrieben Verfahren nach der EP 0 130 499 B1 wird ein erhöhter Umsatz bei der Abwasserbehandlung erreicht. Es ergibt sich eine Raumbelastung von bis zu 70 kg CSB/m³d. Abwasser und Gas werden bei dem Schlaufenreaktor nach dieser Druckschrift über eine aus zwei stoßfreien, konzentrisch angeordneten Rohren bestehende Zweistoffdüse in ein Leitrohr eingeleitet. Das zum Zuführen von Gas dienende Rohr der Zweistoffdüse liegt innerhalb des der Zufuhr des Abwassers dienenden äußeren Rohres. Es ragt aus dem äußeren Rohr heraus. Beim Betrieb dieses Schlaufenreaktors entsteht eine Schlaufenströmung um das Leitrohr herum, mit einer Vermischung von Flüssigkeit und Gas. Vorteile einer solchen Schlaufenströmung sind eine verhältnismäßig homogene Strömung der beiden Phasen und eine damit verbundene gute Übertragung des für die Abwasserreinigung benötigten Sauerstoffs aus dem Gas in die Flüssigkeit. Bei diesem bekannten Verfahren wird das Gas oben in das Leitrohr eingeführt, so daß es mindestens einmal eine vollständige Schlaufe durchläuft, ehe es aus dem Reaktionsbehälter austreten kann. Es ist jedoch ein hoher Energieeintrag durch die dem Leitrohr zugeführte Flüssigkeit erforderlich, damit das zugeführte und zu Blasen zerteilte Gas entgegen seinem "Aufstiegsstreben" mit der Schlaufenströmung nach unten transportiert wird.

Der Erfindung liegt die Aufgabe zugrunde, das eingangs geschilderte Verfahren so weiterzubilden, daß der Investitionsaufwand und der Energiebedarf vermindert werden können.

Diese Aufgabe wird gemäß der Erfindung dadurch gelöst,
- daß das innere, das Gas führende Rohr der Zweistoffdüse, dem das Gas mittels eines Gebläses zugeführt wird, mit einem Abstand zur Austrittsöffnung des äußeren, das Abwasser führenden Rohres innerhalb desselben endet, der mindestens um den Faktor "5" größer als der Innendurchmesser des äußeren Rohres im Bereich der Austrittsöffnung ist, und
- daß die Austrittsöffnung des äußeren Rohres und damit der Zweistoffdüse vom Boden des außer der Zweistoffdüse keine weiteren Einbauten enthaltenden Reaktionsbehälters einen Abstand hat, der größer als die halbe Höhe des im Reaktionsbehälter befindlichen Abwassers ist.

Bei diesem Verfahren werden das in einem Kreislauf bewegte Abwasser und das Gas mindestens einer Zweistoffdüse räumlich getrennt voneinander zugeführt, wobei das Gas wegen des gegenüber dem äußeren Rohr kürzeren Rohres bereits in der Zweistoffdüse vordispergiert wird. Beim Austritt des Gemisches aus Abwasser und Gas aus der Zweistoffdüse in den Inhalt des Reaktionsbehälters entsteht eine Impulsübertragung von dem aus der Zweistoffdüse austretenden Gemisch an das im Reaktionsbehälter befindliche Abwasser, durch welche das Gas zusätzlich sehr fein dispergiert und im Reaktionsbehälter nach unten transportiert wird. Durch die damit abwärts gerichtete Strömung des Gas-Abwassergemisches und die Umlenkung desselben am Boden des Reaktionsbehälters, entsteht in demselben eine Umlaufströmung, so daß das Gas sehr gleichmäßig im Reaktionsbehälter verteilt wird. Ein Leitrohr oder eine gesonderte Dispergiereinrichtung, wie beispielsweise ein oft verwendeter Ringverteiler oder ein Membranverteiler, werden bei diesem Verfahren nicht benötigt. Da der Reaktionsbehälter also ohne gesonderte Einbauten auskommt, kann er sehr einfach gestaltet werden. Der Investitionsaufwand ist daher niedrig. Wegen der fehlenden Einbauten kann auch der Energiebedarf bei diesem Verfahren vermindert werden.

Das Verfahren nach der Erfindung wird anhand der Zeichnungen in Ausführungsbeispielen erläutert.

Es zeigen:

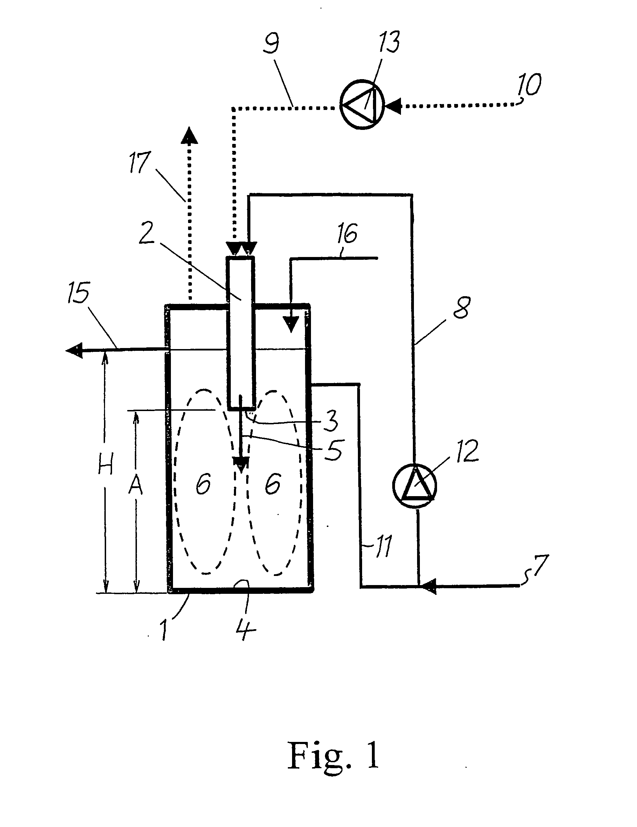

Fig. 1 schematisch eine Anordnung zur Durchführung des Verfahrens.
Fig. 2 einen Querschnitt durch eine Zweistoffdüse in vergrößerter Darstellung.
Fig. 3 eine gegenüber Fig. 1 erweiterte Anordnung.

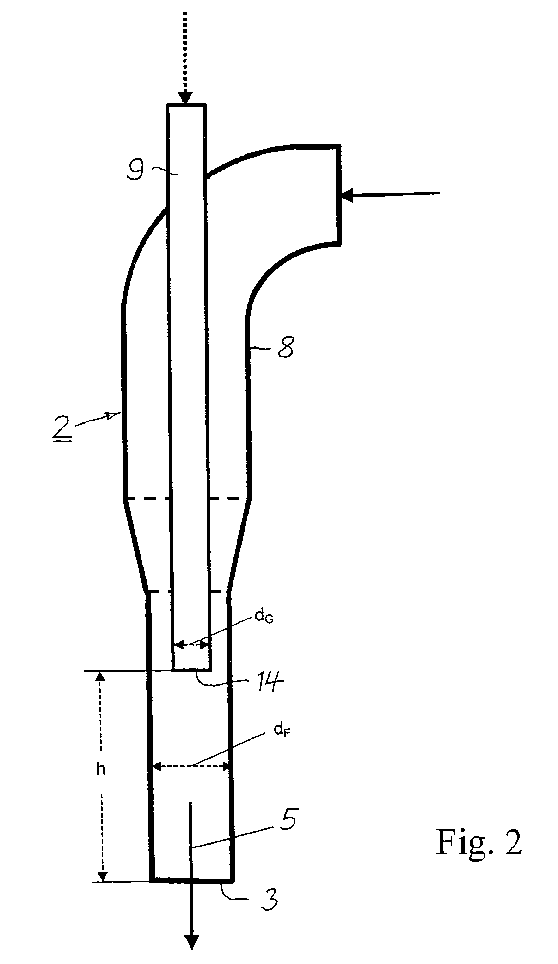

In einem mit vertikaler Achse aufgebauten Reaktionsbehälter 1 ist eine Zweistoffdüse 2 mit vertikaler Achse angeordnet, deren genauerer Aufbau aus Fig. 2 hervorgeht. Sie ragt in den Reaktionsbehälter 1 und bei Betrieb des Verfahrens bis in demselben befindliches Abwasser hinein. Die Austrittsöffnung 3 der Zweistoffdüse 2 hat vom Boden 4 des Reaktionsbehälters 1 einen Abstand A, der größer als die halbe Höhe H des in demselben befindlichen Abwassers ist. Das in Richtung des Pfeiles 5 aus der Zweistoffdüse 2 austretende Gas-Abwassergemisch wird im Reaktionsbehälters 1 in Form von gestrichelt eingezeichneten Umlaufströmungen 6 bewegt.

Das zu reinigende Abwasser wird bei 7 einem äußeren Rohr 8 aufgegeben, das an seinem in den Reaktionsbehälter 1 hineinragenden Ende Teil der Zweistoffdüse 2 ist. Ein inneres Rohr 9, das an seinem Ende ebenfalls zur Zweistoffdüse 2 gehört, führt bei 10 aufgegebenes Gas. An den Reaktionsbehälter 1 ist außerdem ein Rohr 11 angeschlossen, das mit dem äußeren Rohr 8 verbunden ist. Über das Rohr 11 kann Abwasser aus dem Reaktionsbehälter 1 entnommen und mittels einer Pumpe 12, zusammen mit neuem Abwasser im Kreislauf wieder in denselben eingeleitet werden. Das Gas wird der Zweistoffdüse 2 mittels eines Gebläses 13 zugeführt. Pumpe 12 und Gebläse 13 stellen sicher, daß das Gemisch aus Gas und Abwasser mit ausreichend hoher Geschwindigkeit aus der Zweistoffdüse austritt.

In der Zweistoffdüse 2 sind die Enden der Rohre 8 und 9 konzentrisch zueinander angeordnet. Fig. 2 zeigt eine bevorzugte Ausführungsform der Zweistoffdüse 2. Das äußere Rohr 8 umgibt das innere, das Gas führende Rohr 9 mit Abstand, so daß rund um dasselbe ein freier Ringspalt vorhanden ist, durch den das Abwasser hindurchtreten kann. Das äußere Rohr 8 ist im Bereich seiner Austrittsöffnung 3, die gleichzeitig die Austrittsöffnung der Zweistoffdüse ist, vorzugsweise verengt. Der Innendurchmesser des Innenrohres 9 ist mit d_{G} bezeichnet, während der Innendurchmesser des äußeren Rohres 8 im Bereich seiner Austrittsöffnung 3 mit d_{F} bezeichnet ist. Das Verhältnis von d_{G} zu d_{F} kann etwa zwischen 0,6 und 0,9 liegen. Es beträgt vorzugsweise 0,75. Das innere Rohr 9 endet bereits im äußeren Rohr 8. Sein offenes Ende 14 hat von der Austrittsöffnung 3 des äußeren Rohres 8 einen Abstand h, der um mindestens den Faktor "5" größer als d_{F} ist.

Das Verfahren nach der Erfindung wird beispielsweise wie folgt durchgeführt:

Das zu reinigende, über das Rohr 8 zugeführte Abwasser (Rohabwasser) wird gegebenenfalls zusammen mit dem Reaktionsbehälter 1 über das Rohr 11 entnommenem Abwasser der Zweistoffdüse 2 zugeführt. Gleichzeitig wird der Zweistoffdüse 2 über das innere Rohr 9 Gas zugeführt. Bei hinreichender Geschwindigkeit dieser beiden Medien, die mittels der Pumpe 12 einerseits und des Gebläses 13 andererseits eingestellt werden kann, wird das Gas in der Zweistoffdüse 2 vordispergiert. Beim Austritt des Gemisches aus Abwasser und Gas aus der Zweistoffdüse 2 in das im Reaktionsbehälter 1 befindliche Abwasser entsteht eine Impulsübertragung von dem aus der Zweistoffdüse 2 austretenden Gemisch an das im Reaktionsbehälter 1 befindliche Abwasser, durch welche das Gas zusätzlich sehr fein dispergiert und im Reaktionsbehälter 1 nach unten transportiert wird.

Durch die damit abwärts gerichtete Strömung des Gas-Abwassergemisches und die Umlenkung desselben am Boden 4 des Reaktionsbehälters 1, entstehen die Umlaufströmungen 6, so daß das Gas sehr gleichmäßig im Reaktionsbehälter 1 verteilt wird. Das gereinigte Abwasser kann den Reaktionsbehälter 1 gemeinsam mit Biomasse über eine Leitung 15 verlassen. In einer nachgeschalteten, hier nicht gezeigten Vorrichtung, können Abwasser und Biomasse voneinander getrennt werden. Die Biomasse kann zum größten Teil über eine Leitung 16 in den Reaktionsbehälter 1 zurückgeführt werden. Der Rest der Biomasse kann als Überschußschlamm entnommen werden.

Die Austrittsöffnung 3 der Zweistoffdüse 2 befindet sich - wie schon erwähnt - im oberen Bereich des Abwassers des Reaktionsbehälters 1, zweckmäßigerweise in etwa zwei Drittel der vom Boden 4 des Reaktionsbehälters 1 gerechneten Höhe H des Abwassers. Je nach Höhe der Mündung der Zweistoffdüse 2 im Reaktionsbehälter 1 wird das Gas mittels des Gebläses 13 mehr oder weniger verdichtet. Eine dem zugeführten Gas entsprechende Gasmenge kann den Reaktionsbehälter 1 über eine Leitung 17 verlassen.

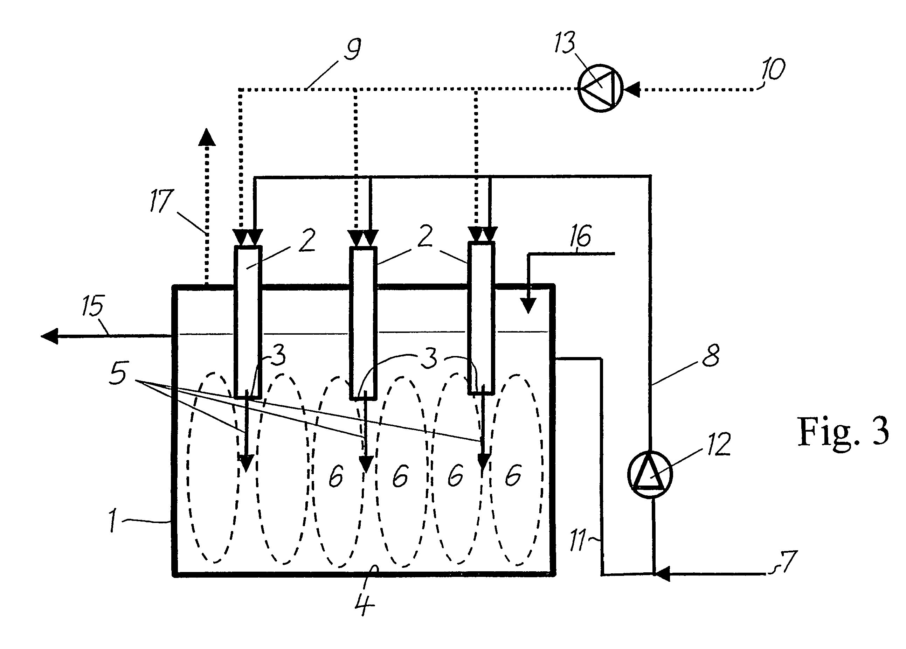

Da das Verhältnis von Höhe zu Durchmesser des Reaktionsbehälters 1 und die Geschwindigkeiten des Abwassers und des Gases in der Zweistoffdüse 2 aus fluiddynamischen Gründen bestimmte Werte einhalten müssen und weil die Bauhöhe des Reaktionsbehälters 1 aus energetischen Gründen beschränkt ist, werden bei großen Abwassermengen zweckmäßig mehrere Zweistoffdüsen 2 mit entsprechenden Zuleitungen in einem Reaktionsbehälter 1 angeordnet. Das ist beispielsweise für drei Zweistoffdüsen 2 in Fig. 3 gezeigt. Der Einbau von mehreren Zweistoffdüsen 2 in einen Reaktionsbehälter 1 hat den zusätzlichen Vorteil, daß die Dispergierung des zugeführten Gases durch einen Pralleffekt der umgelenkten und aufeinander prallenden Flüssigkeitsströme noch verstärkt wird.

## Patentansprüche

1. Verfahren zum biologischen Reinigen von Abwasser, bei welchem das Abwasser und Gas einem Mikroorganismen enthaltenden Reaktionsbehälter über eine ausschließlich zwei stoßfreie, konzentrisch zueinander angeordnete Rohre aufweisende Zweistoffdüse zugeführt werden, die frei von zusätzlichen Zuführungselementen ist und mit vertikaler Achse in den Reaktionsbehälter bis in das darin befindliche Abwasser hineinragt, wobei das innen liegende, das Gas führende innere Rohr der Zweistoffdüse unter Einschluß eines freien Ringspalts von dem das mittels einer Pumpe geförderte Abwasser führenden äußeren Rohr umschlossen ist, und bei welchem das Gemisch aus Abwasser und Gas in dem Reaktionsbehälter in einem Kreislauf bewegt wird, **dadurch gekennzeichnet,**
- **daß** das innere, das Gas führende Rohr (9) der Zweistoffdüse (2), dem das Gas mittels eines Gebläses zugeführt wird, mit einem Abstand (h) zur Austrittsöffnung (3) des äußeren, das Abwasser führenden Rohres (8) innerhalb desselben endet, der mindestens um den Faktor "5" größer als der Innendurchmesser (d_{F}) des äußeren Rohres (8) im Bereich der Austrittsöffnung (3) ist, und
- **daß** die Austrittsöffnung (3) des äußeren Rohres (8) und damit der Zweistoffdüse (2) vom Boden (4) des außer der Zweistoffdüse (2) keine weiteren Einbauten enthaltenden Reaktionsbehälters (1) einen Abstand (A) hat, der größer als die halbe Höhe (H) des im Reaktionsbehälter (1) befindlichen Abwassers ist.

2. Verfahren nach Anspruch 1, **dadurch gekennzeichnet, daß** die Austrittsöffnung (3) des äußeren Rohres (8) und damit der Zweistoffdüse (2) etwa bei zwei Drittel der Höhe des über dem Boden (4) des Reaktionsbehälters (1) befindlichen Abwassers angeordnet wird.

3. Verfahren nach Anspruch 1 oder 2, **dadurch gekennzeichnet, daß** das Abwasser dem äußeren Rohr (8) der Zweistoffdüse (2) zusammen mit aus dem Reaktionsbehälter (1) entnommenem Abwasser zugeführt wird.

4. Verfahren nach einem der Ansprüche 1 bis 3, **dadurch gekennzeichnet, daß** in einem Reaktionsbehälter (1) zwei oder mehr Zweistoffdüsen (2) ohne sonstige Einbauten angeordnet werden.

## Claims

1. A method for the biological cleaning of waste water in which the waste water and gas are supplied to a reaction vessel containing micro organisms through a two-component nozzle which consists exclusively of two steady mutually concentric tubes, said nozzle having no additional supply elements and projecting into the reaction vessel and into the waste water therein along its vertical axis, wherein the internally located gas-conveying inner tube of the two-component nozzle is surrounded through the intermediary of a free annular gap by the outer tube conveying the waste water which is delivered by means of a pump, and in which the mixture of waste water and gas in the reaction vessel is moved in circulatory manner, **characterized in**
- **that** the inner gas-conveying tube (9) of the two-component nozzle (2), to which the gas is supplied by means of a blower, ends within the outer waste-water-conveying tube (8) at a spacing (h) from the outlet opening (3) thereof which is greater by at least the factor "5" than the internal diameter (d_{F}) of the outer tube (8) in the vicinity of the outlet opening (3), and
- **that** the outlet opening (3) of the outer tube (8) and thus the two-component nozzle (2) is spaced from the base (4) of the reaction vessel (1), which contains no further fittings other than the two-component nozzle (2), by a distance (A) which is greater than half the height (H) of the waste water in the reaction vessel (1).

2. A method according to claim 1, **characterized in that** the outlet opening (3) of the outer tube (8) and thus the two-component nozzle (2) is arranged at approximately two thirds of the height of the waste water contained above the base (4) of the reaction vessel (1).

3. A method according to claim 1 or 2, **characterized in that** the waste water is supplied to the outer tube (8) of the two-component nozzle (2) together with waste water extracted from the reaction vessel (1).

4. A method according to one of the claims 1 to 3, **characterized in that** two or more two-component nozzles (2) are arranged without any other fittings in a reaction vessel (1).

## Revendications

1. Procédé d'épuration biologique d'eau usée, dans lequel l'eau usée et du gaz sont amenés dans un réacteur qui contient des microorganismes par une tuyère à deux matières qui présente exclusivement deux tubes coulissants à axe vertical disposés concentriquement l'un par rapport à l'autre et exempts d'éléments supplémentaires d'amenée et qui s'enfonce jusque dans l'eau usée présente dans le réacteur, le tube intérieur, amenant le gaz, de la tuyère à deux matières étant entouré avec un interstice annulaire libre par le tube extérieur qui amène l'eau usée apportée au moyen d'une pompe, le mélange d'eau usée et de gaz présent dans le réacteur étant déplacé en circuit fermé,
**caractérisé en ce que**
le tube intérieur (9), amenant le gaz, de la tuyère (2) à deux matières, auquel le gaz est apporté au moyen d'un ventilateur, se termine à l'intérieur du tube extérieur (8) qui amène l'eau usée à une distance (h) de l'ouverture de sortie (3) de ce tube extérieur qui est supérieure d'au moins le facteur "5" au diamètre intérieur (d_{F}) du tube extérieur (8) au niveau de l'ouverture de sortie (3) et
**en ce que** par rapport au fond (4) du réacteur (1) qui, à l'exception de la tuyère (2) à deux matières, ne contient aucune autre garniture, l'ouverture de sortie (3) du tube extérieur (8) et donc de la tuyère (2) à deux matières présente une distance (A) supérieure à la moitié de la hauteur (H) de l'eau usée présente dans le réacteur (1).

2. Procédé selon la revendication 1, **caractérisé en ce que** l'ouverture de sortie (3) du tube extérieur (8) et donc de la tuyère (2) à deux matières est disposée sensiblement aux deux tiers de la hauteur de l'eau usée au-dessus du fond (4) du réacteur (1).

3. Procédé selon la revendication 1 ou 2, **caractérisé en ce que** l'eau usée est amenée au tube extérieur (8) de la tuyère (2) à deux matières en même temps que l'eau usée prélevée dans le réacteur (1).

4. Procédé selon l'une des revendications 1 à 3, **caractérisé en ce que** deux ou plusieurs tuyères à deux matières (2) sans autre garniture sont disposées dans un réacteur (1).
